Europäisches Patentamt

European Patent Office

Office européen des brevets

(11) Publication number: **0 305 719**
**A2**

# EUROPEAN PATENT APPLICATION

(21) Application number: 88111676.8

(22) Date of filing: 20.07.88

(51) Int. Cl.⁴: **G21C 7/12** , **G21C 9/00**

(30) Priority: 31.08.87 US 91173

(43) Date of publication of application:
08.03.89 Bulletin 89/10

(84) Designated Contracting States:
CH DE LI SE

(71) Applicant: **GENERAL ELECTRIC COMPANY**
**1 River Road**
**Schenectady New York 12305(US)**

(72) Inventor: **Kobsa, Irvin Raymond**
**2485 La Miranda Drive**
**San Jose California 95125(US)**
Inventor: **Carruth, John Charles**
**430 Hyde Park Drive**
**San Jose California 95136(US)**

(74) Representative: **Catherine, Alain**
**General Electric France Service de Propriété**
**Industrielle 18 Rue Horace Vernet B.P. 76**
**F-92134 Issy-les-Moulineaux Cédex(FR)**

(54) Centrifugal brake for control rod drive.

(57) A centrifugal brake is disclosed for a control rod drive within a boiling water reactor (BWR). Control rods within reactors have dual insertion mechanisms including a motor drive and a hydraulic drive. These drives are concentrically mounted within a cylindrical enclosed pressure chamber. The motor drive is typically of the ball screw type wherein a motor drive rotating threaded shaft through the bottom of the cylindrical chamber. The rotating threaded shaft drives a ball screw nut within a guide tube which urges a hollow piston upwardly. The control rod, connected to the upper end of the hollow piston is in turn urged upwardly into the reactor. The hydraulic drive utilizes hydraulic pressure to move the hollow piston and control rod independently from the ball screw drive upwardly for insertion into the reactor. Where loss of hydraulic system pressure occurs, both the weight of the control rod and pressure from the reactor can cause reversal of the ball screw drive and an undesired retraction of the control rod from the reactor. Accordingly, a centrifugal brake is installed in between the motor and ball screw threaded shaft concentric to a conventional coupling. The brake includes at least the one disc rotatably attached to the ball screw shaft having at least one and preferably two arcuate pawls pivoted on the disc. The pawls are maintained in a retracted position with respect to the disc by conventional detents. A stationary housing with lugs for engagement with the pawls are provided surrounding the disc. When the shaft of the ball screw rotates, responsive to pressure induced control rod withdrawal, the brake disc commences to rotate with increasing angular acceleration. This angular acceleration continues until the centrifugal force acting on the pivotal arcuate pawls of the brake overcome the force of the detents. When the force of the detents is overcome, the pawls pivot outwardly with respect to the disc. The pawls engage the stationary lug and immediately arrest ball nut shaft rotation and therefor control rod withdrawal. Upon motor controlled rod insertion, the stationary lugs reset the pawls to their respective detents and normal control rod insertion can occur. Consequently, unintentional control rod withdrawal under reactor pressure is prevented during hydraulic casualties to the control rod drive while the capability of motor and the ability to reset the brake following inadvertent actuation insertion is preserved.

FIG._2.

## CENTRIFUGAL BRAKE FOR CONTROL ROD DRIVE

This invention relates to control rod drives. More particularly, this invention discloses a centrifugal brake for use on the motor driven ball screw drive of a control rod to prevent unintentional control rod withdrawal during a hydraulic casualty in the control rod drive hydraulic system.

## SUMMARY OF THE PRIOR ART

Control rods are used for insertion, moderation and control of atomic reactor cores, including boiling water reactors (BWRs). When the control rods are inserted, the reaction is moderated. When the control rods are withdrawn, the reaction proceeds.

In conventional reactors, the drives are located in relatively inaccessible portions of the reactor. Typically, in BWRs, the control rods are inserted from the bottom of the reactor vessel to and towards the top of the reactor vessel. The control rods move from a position of withdrawal from the core into a position of insertion into the core. Naturally, and in order to shut down the reaction, the control rods must be fully inserted.

The control rods are inserted by drives. These drives are not only close to the reactor and under the reactor, but during reactor operation are hot and otherwise inaccessible in a limited access area inside of the reactor containment vessel.

The control rod drives use two methods of control rod insertion.

The first of these methods of insertions is a motor drive. Typically, a stepper motor through a coupling rotates a threaded shaft. A ball nut operating along a conventional guide rail follows the threads on the shaft. Raising of the ball nut bears the ball nut against the bottom portion of a hollow piston. The hollow piston in turn is connected at the top to the bottom of a control rod and causes control rod insertion. Conversely, control rod retraction is caused by reversing shaft rotation and lowering the ball nut. The hollow piston is lowered and the control rod follows the lowered hollow piston.

In order to effect rapid control rod insertion or in case of motor drive failure, hydraulic drives are used. Typically, the hydraulic drives operate by admitting high pressure fluid below the hollow piston. The hollow piston leaves its normal position atop the ball screw and rapidly moves to a position of insertion within the reactor under the hydraulic pressure.

Typically and during normal motor drive operation, the hydraulic pressure acting on the hollow piston from the reactor and the hydraulic pressure below the hollow piston are equilibrated. These pressures equilibrate by gradual leakage across a labyrinth seal around the hollow piston.

Unfortunately, if the hydraulic drive pressure fails or pressure is lost in the cylindrical housing, pressure is rapidly reversed on the hollow piston. Two forces then can push the control rod out of insertion within the reactor.

First of these forces is the weight of the control rod. The second force is the pressure within the reactor bearing down on the inserted control rod and hollow piston. Consequently, all ball screw friction is overcome and reverse rotation of the shaft and motor occurs.

This type of control rod withdrawal can be fast. Speeds can be obtained by the control rod (in orders exceeding 2-feet/sec) which are unsafe for even local control rod withdrawal.

The prior art has tried to solve this problem. Specifically, a normally engaged electromagnetic brake has been utilized. Typically, and before motor operation, current is supplied to the normally engaged brake. The brake members are separated enabling the torque supplied by the motor to cause insertion or retraction of the control rod utilizing the ball screw drive. Once insertion or retraction is completed, current is no longer supplied to the brake, and the normally engaged brake engages. Motor insertion or retraction of the drive with the brake engaged is not possible.

Unfortunately, failures of such electromagnetic brakes have occurred. When such failures occurred, applicable safety procedures require hydraulic insertion of the effected control rods. A detriment results to the efficiency of the reactor fuel cycle.

## SUMMARY OF THE INVENTION

A centrifugal brake is disclosed for a control rod drive within a boiling water reactor (BWR). Control rods within reactors have dual insertions and withdrawal mechanisms including a motor drive and a hydraulic drive. These drives are concentrically mounted within a cylindrical enclosed pressure chamber. The motor drive is typically of the ball screw type wherein a motor drive rotates a threaded shaft through the bottom of the cylindrical chamber. The rotating threaded shaft drives a ball screw nut within a guide tube which urges a hollow piston upwardly. The control rod, connected to the upper end of the hollow piston is in turn urged upwardly into the reactor. The hydraulic drive utilizes hydraulic pressure to move the hollow piston and control rod independently from the ball screw drive upwardly for insertion into the reactor. Where loss of hydraulic system pressure occurs, both the weight of the control rod and pressure from the reactor can cause reversal of the ball screw drive and an undesired retraction of the control rod from the reactor. Accordingly, a centrifugal brake is installed in between the motor and ball screw threaded shaft concentric to a conventional coupling. The brake includes at least the one disc rotatably attached to the ball screw shaft having at least one and preferably two arcuate pawls pivoted on the disc. The pawls are maintained in a retracted position with respect to the disc by conventional detents. A stationary housing with lugs for engagement with the pawls are provided surrounding the disc. When the shaft of the ball screw rotates, responsive to pressure induced control rod withdrawal, the brake disc commences to rotate with increasing angular acceleration. This angular acceleration continues until the centrifugal force acting on the pivotal arcuate pawls of the brake overcome the force of the detents. When the force of the detents is overcome, the pawls pivot outwardly with respect to the disc. The pawls engage the stationary lug and immediately arrest ball screw shaft rotation and therefor control rod withdrawal. Upon motor controlled rod insertion, the stationary lugs reset the pawls to their respective detents and normal control rod insertion can occur. Consequently, unintentional control rod withdrawal under reactor pressure is prevented during hydraulic casualties to the control rod drive while the capability of motor insertion and the ability to reset the brake following inadvertent actuation is preserved.

## Other Objects, Features, and Advantages

An object of this invention is to disclose in combination with a ball screw and hydraulic control rod drive a centrifugal brake for preventing inadvertent control rod withdrawal upon occurrence of a casualty to the hydraulic drive system. Accordingly, the coupling between the ball screw shaft and motor has provided a centrifugal brake. The brake includes discs having at least one arcuate pawl. The arcuate pawl is pivoted at one end to the disc and has at the opposite end a surface for engaging a lug. The brake is surrounded with a stationary and fixed housing having the lug attached thereto. Upon movement of the motor to drive the control rod for insertion, the disc rotates passing the pawl over the lug from the pivot to and towards the lug engaging end with the result that no locking of the brake occurs. Upon control rod withdrawal, centrifugal force causes the pawls to pivot outwardly. In the outward position, they engage the lug and ball nut retraction stops. In turn, control rod withdrawal stops as the rod comes to rest through the hollow piston onto the nut of the ball screw drive.

An advantage of the centrifugal brake herein disclosed is that modification of extant drives can easily occur. This modification can occur because the centrifugal brake herein disclosed takes no more room in a drive train than a conventional coupling between the ball screw drive and motor.

A further object of this invention is to disclose a detent for setting and providing a predictable release of the brake. According to this aspect of the invention, the detent attaches the pawls to the disc opposite to the pivot. Consequently, the brake will not immediately release upon reverse motion of the ball screw drive. Instead, release will only occur when centrifugal force exerts a sufficient force upon the pawls to overcome the holding force of the detent.

An advantage of this aspect of the invention is two-fold. First, when the brake rotates in the direction for control rod insertion, reset of the brake occurs. Specifically the pawls in passing the stationary lugs, are pivoted into a reset position established by the detents.

A further advantage of this aspect of the invention is that the detent force can be set for any desired overspeed. By selecting an overspeed that is beyond the normal operating speed of the motor drive, locking of the brake will only occur upon hydraulic casualty withdrawal of the control rod drive.

A further advantage of the disclosed pawls is that the forces of angular acceleration upon insertion rotation of the drive cause the pivoting pawls to reset to their retracted position.

## BRIEF DESCRIPTION OF THE DRAWINGS

Other objects, features, and advantages of this invention will become more apparent after referring to the following specification and attached drawings in which:

Fig. 1 is a schematic view of a control rod drive illustrating the brake installed to a conventional prior art control rod drive;

Fig. 2 is a schematic illustrating the operation of the centrifugal brake of this invention.

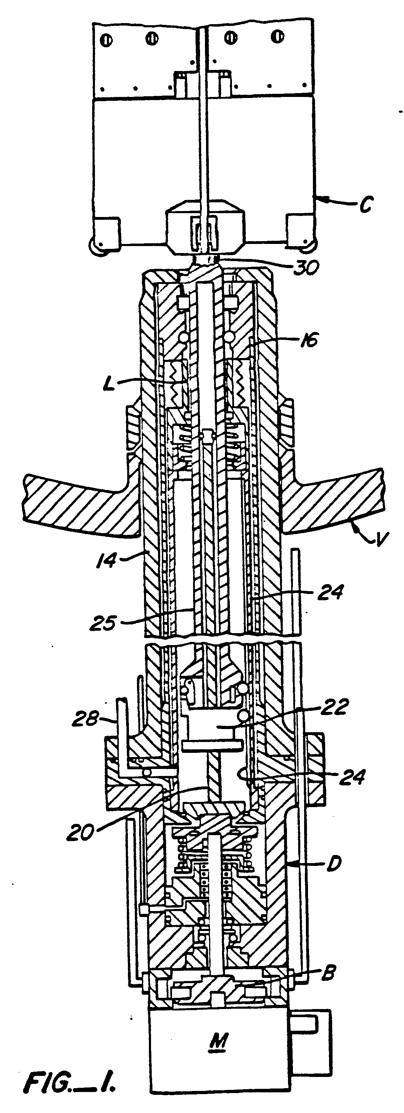

Referring to Fig. 1, a conventional reactor vessel V is illustrated at its bottom wall with a control rod drive housing 14. The outer cylindrical housing 16 of conventional control rod drive D is mounted inside the control rod drive housing 14. The control rod drive D includes a motor M for normal insertions and retraction of the control rod drive. Typically motor M turns a threaded shaft 20. A ball nut 22 is prevented from turning by engagement in a guide tube 24. This guide tube allows the ball nut 22 to raise and lower as the thread shaft 20 is turned. Upon clockwise (when viewed from above) rotation of motor M, ball nut 22 raises and causes control rod insertion. Upon counterclockwise rotation, ball nut 22 lowers and causes control rod retraction.

Ball nut 22 supports a hollow piston 25. Hollow piston 25 passes through a labyrinth seal L to a coupling 30. Coupling 30 mates with the lower end of the control rod C (see top of Fig. 1 for bottom portion only of control rod). Consequently, it is accurately stated that the ball nut 22 acting on one end of the hydraulic piston 25 inserts or retracts the control rod at coupling 30 through the linkage provided by the hollow piston.

The primary function of the hollow piston 25 is to permit rapid hydraulic insertion. Such hydraulic insertion can be easily understood.

A conduit 28 introduces hydraulic fluid under pressure (approximately 1850 lbs./inch$^2$) into the cylindrical volume interior of drive D and below hollow piston 25. The forces of hydraulics acting upon the lower end of hollow piston 25 urge the piston upwardly. Piston 25 leaves its position of support on the ball nut 22 and causes insertion of the control rod through upward movement of the hollow piston 25.

During normal operation of the control rod drive D, pressure within the drive D and within the reactor vessel V, are equilibrated. Such equilibration occurs by gradual leakage across a labyrinth seal L bearing upon the sides of the hollow piston.

Unfortunately, there is inherent in the dual motor and hydraulic drive here shown a latent defect. Specifically, if the hydraulic system fails, retraction of the control rod can occur. This retraction occurs under two forces.

The first of these forces is the weight of the control rod itself. It must be remembered that for insertion the control rod must be upwardly moved. Consequently, the weight of the control rod itself (in the order of 250 lbs.) plus those weights of the vertically moving components of the control rod drive, all bear upon the ball screw mechanism and motor drive.

Secondly, the hollow piston 25 and the control rod itself move outward from the reactor vessel under hydraulic pressure from within the reactor vessel. The hydraulic pressure from the interior of the reactor is in the order of 1000 lbs./inch$^2$.

It has been observed that the combination of these forces can cause the threaded shaft 20 to turn under urging of the ball screw nut 22. Consequently, shaft 20 and motor M rapidly spin counterclockwise (when viewed from above). Control rod withdrawal can occur at a speed where damage to the reactor can occur. It is in this environment that brake B illustrated inserted between motor M and threaded shaft 20 affects the safety features of this invention.

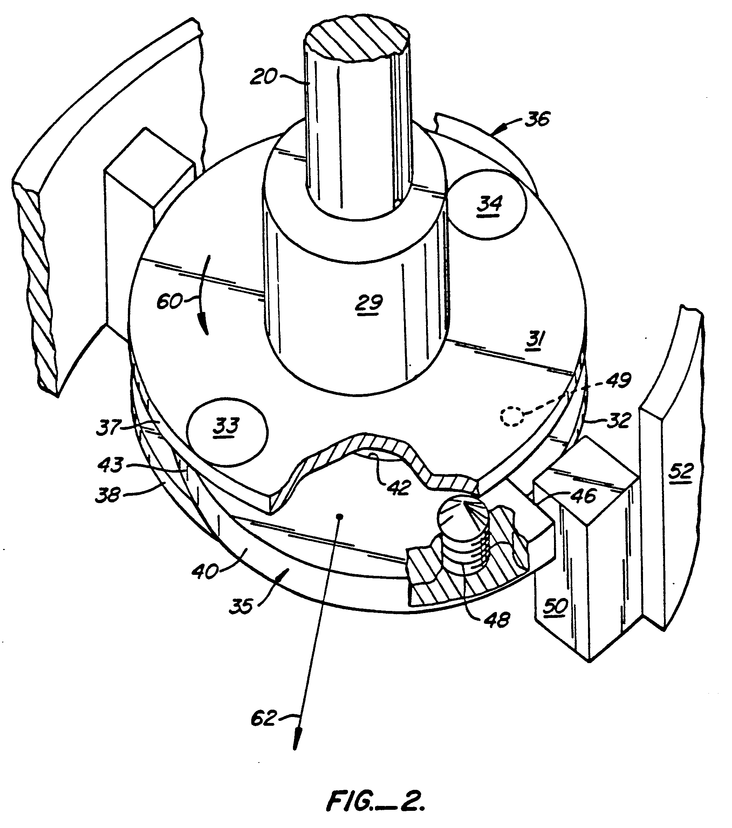

Normally inserted between motor M and shaft 20 is a conventional coupling. The coupling joins paired splined shafts. The invention herein disclosed with respect to Fig. 2 substitutes for one-half of the coupling.

Referring to Fig. 2, a keyed female shaft member 29 has a key installed thereto which key locks to threaded shaft 20. The opposite end of the coupling, not shown, includes a conventional splined shaft.

Shaft 29 has attached thereto concentrically two discs. These discs include disc 31 on the upward side and disc 32 on the lower side. The discs 31, 32 have identical outside diameters.

Discs 31 and 32 are spaced apart to define a disc shape interstice between them. These discs are transpierced across this interstice by paired shafts 33, 34. Shafts 33, 34 have attached thereto respective pawls 35, 36. A simple discussion of pawl 35 will be presented. Pawl 36 is identical with pawl 35.

Pawl 35 is an arcuate piece of metal. It has an outer edge 40 which has the same curvature as the outer edge 37, 38 of the respective disc members 31, 32. It has an inner edge 42 having the curvature of shaft 29.

The pawl 35 has a first end 43. End 43 is transpierced by shaft 33 and pivoted on shaft 33 so that the pawl is free to pivot into and out of a position of registry between the respective discs 31, 32. That is to say, pawl 35 can move into and out of the interstices between discs 31, 32.

Pawl 35 has a lug engaging surface 46. Pawl engaging surface 46 is for engagement with a lug 50 positioned to the sides of a stationary housing 52 (only partially shown).

The pawl includes, adjacent to the lug engaging surface 46 a conventional detent 48. Detent 48 biases upwardly into a female detent receiving surface 49 configured in the lower side of disc 31. Typically, the detent is spring biased with a desired spring force.

Locking of the brake mechanism can be easily understood. Assuming that shaft 29 and the discs 31, 32 rotate counterclockwise in the direction of arrow 60, a centrifugal force will act upon pawl 35 in the direction of arrow 62. Typically this force will be radially away from the axis of shaft 29. Assuming that rotation accelerates, the centrifugal force acting on wings 35 will increase. This centrifugal force will increase to the point where the centrifugal force 62 exceeds the ability of the detent mechanism 48 to maintain registry with aperture 49. The pawl 35 will pivot outwardly from its position of registry between discs 31, 32.

When this outward pivotal movement of the wing 35 occurs, end 46 of wing 35 will impact lug 50. Rotation of shaft 20 will stop.

As set forth with respect to Fig. 1, ball nut 22 will likewise stop. A control rod bearing on hollow piston 25 will no longer retract from reactor vessel V.

If the pawl 35 is inadvertently deployed (by seismic or vibratory loads), it may be desired to effect insertion of the control rod or restore the pawl 35. Assuming motor M rotates clockwise, it can be understood that lug 50 serves to reset the respective pawls 35 and 36.

Referring again to Fig. 2, it can be seen that the outside edge 40 of pawl 35 will contact lug 50. This contact will first occur adjacent shaft 33 and will last occur adjacent the pawl engaging surface 46. This contact, as rotation of the discs 31, 32 continues clockwise, will cause wing 35 to move into a position of registry between the discs 31, 32. When such movement is completed, detent 48 will reset to detent aperture 49.

Thus, the disclosed apparatus has the advantage of being able to reset the brake once overspeed has occurred. Thus, in the presence of the inadvertent deployment, motor M can be utilized to discretely restore the brake of the effected control rod.

It will be appreciated that modifications can easily be made to the preferred embodiment of the centrifugal brake used in combination with the control rod herein set forth. For example, only one disc 31 is required. Likewise, only one lug 50 and one pawl 35 is necessary. Further, although detent mechanism 48 is desired, other mechanisms could be suited for maintaining wing 35 in registry between discs 31, 32. Spring biases, for example, could be used and the speed at which the brake would open could be adjusted.

## Claims

1. In combination with a control rod drive for inserting control rods within a nuclear reactor core through the bottom of a reactor vessel wherein the control rod drive includes a cylindrical housing attached at the bottom of and as an extension to the reactor vessel; a hollow piston for hydraulic movement within said cylindrical housing, said hollow piston having a support at the upper end thereof for a control rod; a reversible motor for driving a ball screw drive at the bottom of said cylindrical housing, said motor having a normal operating speed; a ball screw drive extending from said motor at the bottom of said cylindrical housing concentrically upward interior of said cylindrical housing with a rotating threaded shaft and a ball nut for following the threads on said shaft, said ball nut positioned for supporting the lower end of said hollow piston whereby said hollow piston raises and lowers responsive to rotation of said threaded shaft by said motor; a hydraulic inlet communicated below said hollow piston for urging said hollow piston upwardly in said cylindrical housing independent of said ball nut for inserting said control rod independent of said ball nut, the improvement to said control rod drive including a centrifugal brake between said motor and threaded shaft, said brake having means for setting upon rotation of said ball screw at said threaded shaft at speeds in excess of the normal operation speed of said motor.

2. The invention of claim 1 and wherein said brake includes a disc concentrically mounted for rotation with said threaded shaft; a pawl mounted to said disc, said pawl pivoted at one end of having a lug engagement surface at the other end; a lug fixed with respect to said control rod housing for engagement with the lug engaging surface;
and means for maintaining said pivoted pawl away from said lug until said disc rotates at a speed in excess of the normal operating speed of said motor.

3. The invention of claim 2 and including first and second discs, said discs spaced apart to define an interstitial space, said pawl having an arcuate shape for fitting into the disc shaped interstitial space defined between said two discs.

4. The invention of claim 3 and including first and second pivoted pawls attached to said discs.

5. The invention of claim 4 and wherein said means for maintaining said pivoted pawls includes a plurality of detents, each detent for holding a pivoted pawl; and plurality of lugs fixed with respect to said cylindrical housing.

6. A control rod drive for inserting control rods within a nuclear reactor core through the bottom of a reactor vessel comprising in combination:
a cylindrical housing attached at the bottom of and as an extension to the reactor vessel, a hollow piston for hydraulic movement within said cylindrical housing, said hollow piston having a support for a control rod at the upper end thereof;
a reversible motor for driving a ball nut drive at the bottom of said cylindrical housing said motor having a normal operating speed;
a ball nut drive extending from said motor at the bottom of said cylindrical housing concentrically interior of said housing, said ball screw drive having a rotating threaded shaft and a ball nut for following the threads on said shaft, said ball nut positioned for supporting the lower end of said hollow piston whereby said hollow piston raises and lowers responsive to rotation of said threaded shaft by said motor;

a hydraulic inlet communicated below said hollow piston for urging said hollow piston upwardly in said cylindrical housing independent of said ball nut, a centrifugal brake operatively connected to said threaded shaft, said brake having means for setting upon rotation of said ball nut for control rod withdrawal at speeds of said threaded shaft in excess of the normal operating speed of said motor.

7. The invention of claim 6 and wherein said brake includes a disc concentrically mounted for rotation with said threaded shaft; a pawl mounted to said disc, said pawl pivoted at one end and having a lug engagement surface at the other end; a lug fixed with respect to said control rod housing for engagement with the lug engaging surface;

and means for maintaining said pivoted pawl away from said pawl until said disc rotates at a speed in excess of the normal operating speed of said motor.

8. The invention of claim 7 and including first and second discs, said discs spaced apart to define an interstitial space, said pawl having an arcuate shape for fitting into the disc shaped interstitial space defined between said two discs.

9. The invention of claim 7 and including first and second pawls attached to said discs.

10. The invention of claim 9 including a plurality of lugs fixed with respect to said cylindrical housing.

FIG._1.

20

36

34

29

31

49

60

37

33

32

43

38

42

52

40

35

46

48

50

62

FIG._2.